# EUROPÄISCHE PATENTSCHRIFT

(11) **EP 3 415 804 B1**
(45) Veröffentlichungstag und Bekanntmachung des Hinweises auf die Patenterteilung: **14.04.2021**
(21) Anmeldenummer: 17176378.2
(22) Anmeldetag: 16.06.2017
(51) Int. Cl.: F16P 3/14

(54) **SICHERHEITSVORRICHTUNG**
SAFETY DEVICE
DISPOSITIF DE SÉCURITÉ

(43) Veröffentlichungstag der Anmeldung: 19.12.2018
(73) Patentinhaber: Leuze electronic GmbH + Co. KG, 73277 Owen/Teck (DE)
(72) Erfinder: Rohbeck, Volker, 85244 Röhrmoos (DE); Feller, Bernhard, 86316 Friedberg (DE); Eder, Alexander, 86928 Hofstetten (DE)
(74) Vertreter: Ruckh, Rainer Gerhard

(56) Entgegenhaltungen:
- EP-A1- 1 927 957
- EP-A1- 2 023 160
- EP-A2- 1 164 556
- EP-A2- 2 306 063
- DE-A1- 10 000 287
- DE-A1-102006 008 805
- DE-A1-102006 029 643

## Beschreibung

Die Erfindung betrifft eine Sicherheitsvorrichtung.

Derartige Sicherheitsvorrichtungen werden in der Sicherheitstechnik, insbesondere im Bereich des Personenschutzes eingesetzt. Die Sicherheitsvorrichtung weist typischerweise einen optischen Sicherheitssensor in Form eines Lichtvorhangs auf, der einen Sicherheitsausgang zum Steuern des Betriebs einer gefahrbringenden Maschine aufweist. Mit dem Lichtvorhang wird ein flächiger Überwachungsbereich im Bereich dieser Maschine überwacht. Wird kein Objekt mit dem Lichtvorhang erkannt, generiert dieser an den Sicherheitsausgängen Ausgangssignale, mit denen der Betrieb der Maschine freigegeben wird. Wird jedoch mit dem Lichtvorhang ein Objekt erkannt, generiert der Lichtvorhang ein Sicherheitssignal in Form eines Abschaltens der Sicherheitsausgänge, sodass zur Vermeidung von Gefahrensituationen die Maschine stillgesetzt wird.

Da es oftmals erforderlich ist, nichtsicherheitskritische Objekte wie zu bearbeitende Werkstücke durch den vom Lichtvorhang erfassten Überwachungsbereich der Maschine zuzuführen, ohne dass dann der Lichtvorhang durch ein Sicherheitssignal die Maschine stillsetzt, ist die Sicherheitsvorrichtung mit einer Mutingfunktion ausgestattet. Hierzu sind dem Lichtvorhang Mutingsensoren vorgeordnet. Wird mit den Mutingsensoren ein nichtsicherheitskritisches Objekt als zulässiges Objekt erkannt, wird der Lichtvorhang gemutet, das heißt überbrückt, sodass dieser bei Passieren des zulässigen Objekts kein Sicherheitssignal generiert. Damit wird die Verfügbarkeit der Maschine erhöht, da ein das zulässige Objekt den vom Lichtvorhang überwachten Überwachungsbereich passieren kann, ohne dass der Lichtvorhang ein die Maschine stillsetzendes Sicherheitssignal generiert.

Nachteilig hierbei ist jedoch der durch die erforderlichen Mutingsensoren erhöhte konstruktive Aufwand der Sicherheitsvorrichtung.

Der Lichtvorhang einer solchen Sicherheitsvorrichtung umfasst generell eine Sendeeinheit mit Lichtstrahlen emittierenden Sendern an einem Rand des Überwachungsbereichs und eine Empfangseinheit mit Lichtstrahlen empfangenden Empfängern. Eine Objektdetektion erfolgt dadurch, dass erkannt wird, ob der Strahlengang wenigstens einer der Lichtstrahlen unterbrochen ist.

Aufgrund dieses Funktionsprinzips wird bei einem Muting generell ein Mutingbereich erhalten, der sich über die gesamte Breite des Überwachungsbereichs erstreckt. Dies ist dann problematisch, wenn ein zulässiges Objekt eine geringere Breite als der Überwachungsbereich aufweist. Dann nämlich können seitlich zum zulässigen Objekt sicherheitskritische Objekte in den Überwachungsbereich eindringen, die mit einem gemuteten Lichtvorhang nicht mehr erfasst werden können. Dadurch ist eine nicht akzeptable Beeinträchtigung der Sicherheitsfunktion der Sicherheitsvorrichtung gegeben.

Die DE 10 2006 029 643 A1 betrifft eine Vorrichtung zur Überwachung eines Gefahrenbereichs, wobei Objekte entlang einer Förderstrecke dem Gefahrenbereich zuführbar sind. Die Vorrichtung umfasst einen Sensor am Eingang der Förderstrecke, mittels dessen ein sich über die Breite der Förderstrecke erstreckender Überwachungsbereich erfassbar ist, so dass mittels des Sensors ein Objekt während der Bewegung auf der Förderstrecke erfassbar ist. Durch Auswertung von Objektmerkmalen ist das Objekt als sicherheitskritisches Objekt oder nichtsicherheitskritisches Objekt klassifizierbar. Mittels des Sensors wird bei Detektion eines sicherheitskritischen Objekts ein Alarmsignal generiert. Die Länge der Förderstrecke ist an die Objektlänge und Objektgeschwindigkeit so angepasst, dass das Alarmsignal generiert wird, bevor ein sicherheitskritisches Objekt die Grenze des Gefahrenbereichs erreicht.

Der Erfindung liegt die Aufgabe zugrunde, eine Sicherheitsvorrichtung der eingangs genannten Art bereitzustellen, mittels derer bei hoher Funktionalität ein hoher Sicherheitsstandard realisiert ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sicherheitsvorrichtung mit wenigstens einem optischen Sicherheitssensor, welcher zur Überwachung eines flächigen oder räumlichen Überwachungsbereichs ausgebildet ist, mit einer dem Sicherheitssensor zugeordneten Sicherheitsausgangsschaltung mit einer Anordnung von Sicherheitsausgängen, welche abhängig von Signalen des Sicherheitssensors gesteuert sind und mit Umschaltmitteln, mittels derer wenigstens ein Schutzfeld und wenigstens ein Signalfeld aktivierbar ist. Der Sicherheitssensor generiert ein Sicherheitssignal in Form eines Abschaltens des Sicherheitsausgangs, falls mit dem Sicherheitssensor ein Objekt innerhalb des aktivierten Schutzfelds detektiert wird, oder falls innerhalb eines vorgegebenen Zeitintervalls kein zulässiges Objekt innerhalb des aktivierten Signalfelds detektiert wird.

Mit der erfindungsgemäßen Sicherheitsvorrichtung und mit dem damit realisierten Verfahren zur Überwachung eines Überwachungsbereichs wird eine fehlersichere Überwachungsfunktion realisiert, mit der insbesondere ein Gefahrenbereich an einer Maschine gerichtet wird.

Die Grundfunktion der Sicherheitsvorrichtung besteht darin, dass innerhalb wenigstens eines Schutzfelds Objekte erfasst werden, die zu einer Gefährdung führen können. Wird demzufolge ein Objekt innerhalb des Schutzfelds erkannt, generiert der wenigstens eine Sicherheitssensor ein Sicherheitssignal in Form eines Abschaltens des Sicherheitsausgangs oder der Sicherheitsausgänge, sodass damit insbesondere die Maschine stillgesetzt wird und damit von dieser keine Gefährdungen mehr ausgehen können.

Weist die Sicherheitsvorrichtung nur einen Sicherheitssensor auf, so kann dessen Schutzfeld den gesamten Überwachungsbereich erfassen. Weist die Sicherheitsvorrichtung mehrere Sicherheitssensoren auf, so können sich deren Schutzfelder so ergänzen, dass diese den gesamten Überwachungsbereich abdecken.

Erfindungsgemäß wird mit der Sicherheitsvorrichtung weiterhin eine Überwachungsfunktion dadurch realisiert, dass für den oder die Sicherheitssensoren einzelne Signalfelder aktiviert werden können, innerhalb derer zulässige Objekte den jeweiligen Sicherheitssensor passieren können, ohne dass der Sicherheitssensor ein Sicherheitssignal generiert. Es können nicht gefahrbringende, nicht sicherheitskritische Objekte durch den von dem oder den Sicherheitssensoren erfassten Überwachungsbereich gefördert werden, ohne dass hierzu ein unnötiges Stillsetzen der Maschine erfolgt, wodurch die Verfügbarkeit der Maschine gewährleistet ist.

Ein Vorteil der erfindungsgemäßen Sicherheitsvorrichtung besteht darin, dass diese Überwachungsfunktion ohne Einsatz externer Sensoren möglich ist.

Wesentlich hierbei ist, dass die Größe jedes Signalfelds und die Zeitdauer, innerhalb derer die Detektion des zulässigen Objekts im Signalfeld erfolgen muss, an die Abmessungen des zulässigen Objekts und dessen Transportgeschwindigkeit angepasst sind. Der Verzicht auf externe Sensoren ist insbesondere deshalb möglich, da in dem oder jedem Sicherheitssensor selbst eine Überwachungsfunktion derart integriert ist, dass gefordert wird, dass innerhalb eines vorgegebenen Zeitintervalls in einem aktivierten Signalfeld das erwartete zulässige Objekt auch tatsächlich erkannt wird. Ist dies nicht der Fall, geht die Sicherheitsvorrichtung in einen sicheren Zustand derart, dass der jeweilige Sicherheitssensor ein Sicherheitssignal generiert, das zum Stillsetzen der Maschine führt.

Ein wesentlicher Vorteil der Erfindung besteht darin, dass für die Sicherheitssensoren Signalfelder beliebiger Geometrie aktiviert werden können, die an die jeweiligen zulässigen Objekte exakt angepasst sind. Insbesondere können auch mehrere Signalfelder gleichzeitig aktiviert sein, sodass mehrere zulässige Objekte gleichzeitig den Überwachungsbereich passieren können.

Besonders vorteilhaft erstrecken sich ein oder mehrere Signalfelder über Teilbereiche des Überwachungsbereichs. Ein oder mehrere Schutzfelder erstrecken sich über die nicht von den Signalfeldern erfassten Teilbereiche des Überwachungsbereichs.

Damit können zwei unterschiedliche Sicherheitsfunktionen miteinander kombiniert werden. Während mit den einzelnen Signalfeldern innerhalb des Überwachungsbereich ein Passieren des zulässigen Objekts überwacht wird, wird im restlichen Bereich die ursprüngliche Schutzfunktion mit dem Schutzfeld aufrecht erhalten, sodass in diesen Bereichen nach wie vor ein Eindringen sicherheitskritischer Objekte überwacht werden kann.

Gemäß einer vorteilhaften Applikation wird mit der Sicherheitsvorrichtung ein sich über mehrere Transportbahnen erstreckender Durchgangsbereich überwacht, wobei für auf den Transportbahnen transportierte zulässige Objekte selektiv Signalfelder aktivierbar sind.

Dabei ist ein Sicherheitssensor zentral oberhalb des Durchgangsbereichs angeordnet.

Alternativ sind zwei Sicherheitssensoren vorgesehen, die jeweils an einer oberen Ecke des Durchgangsbereichs angeordnet sind.

Mit der erfindungsgemäßen Sicherheitsvorrichtung können dann selektiv für einzelne der nebeneinanderliegende Transportbahnen einzelne Signalfelder definiert werden, sodass selektiv auf einzelnen Transportbahnen zulässige Objekte den Überwachungsbereich passieren können. Diese räumliche Mehrfachanordnung von Signalfeldern ließe sich mit einem Lichtvorhang prinzipiell nicht realisieren, da sich dort eine überbrückte Zone immer über die gesamte Breite des Lichtvorhangs erstrecken muss. Um eine Überwachung mehrerer Transportbahnen zu realisieren, müsste daher für jede Transportbahn ein separater Lichtvorhang vorgesehen werden.

Das Umschalten der Schutzfelder und Signalfelder erfolgt mittels geeigneter Umschaltmittel. Diese Umschaltmittel können in dem Sicherheitssensor selbst integriert sein, sodass mit den Sicherheitssensoren nicht nur eine fehlersichere Objektdetektion, sondern auch eine sichere Umschaltung von Schutzfeldern und Signalfeldern erfolgt. Alternativ können die Umschaltmittel in einer externen Steuerung, beispielsweise einer SPS-Steuerung integriert sein, wobei die Steuerung bevorzugt als sichere, das heißt fehlersichere Steuerung ausgebildet ist. Gemäß einer vorteilhaften Ausgestaltung ist der oder jeder optische Sicherheitssensor ein Flächendistanzsensor oder ein Kamerasensor.

Im einfachsten Fall weist die Anordnung von Sicherheitsausgängen des Sicherheitssensors nur einen Sicherheitsausgang auf.

Zweckmäßig weist der oder jeder Sicherheitssensor zwei Sicherheitsausgänge auf. Zusätzlich kann der oder jeder Sicherheitssensor auch Meldeausgänge aufweisen, über welche Meldesignale ausgegeben werden. Die Meldesignale können signalisieren, ob ein Signalfeld aktiviert ist, beziehungsweise ob ein zulässiges Objekt im Signalfeld detektiert wurde. Die Meldesignale können insbesondere als sichere Signale ausgebildet sein um dann in einer externen Einheit sicher weiterverarbeitet zu werden.

Im einfachsten Fall weist die Sicherheitsvorrichtung nur einen Sicherheitssensor auf, wobei besonders vorteilhaft die Sicherheitsvorrichtung zwei optische Sicherheitssensoren aufweist, welche vom gleichen Sensortyp gebildet sind.

In diesem Fall sind die Sicherheitsausgänge der Sicherheitssensoren logisch verknüpft.

So wird bei Aktivierung jeweils eines Schutzfelds in jedem Sicherheitssensor ein Sicherheitssignal generiert, wenn in wenigstens einem Schutzfeld ein Objekt detektiert wird.

Weiterhin ist bei Aktivierung jeweils eines Signalfelds in jedem Sicherheitssensor ein Sicherheitssignal unterdrückt, wenn sich in einer Warnzone, in welcher sich die Signalfelder schneiden, innerhalb des Zeitintervalls ein zulässiges Objekt erkannt wird.

Die erfindungsgemäße Forderung, dass in einem aktivierten Signalfeld innerhalb eines vorgegebenen Zeitintervalls das erwartete zulässige Objekt erkannt wird, damit eine gültige Überbrückung vorliegt und das Generieren eines Sicherheitssignals im Sicherheitssensor vermieden wird, wird besonders einfach dadurch umgesetzt, dass es nach der Umschaltung des Schutzfeld-/Signalfeldpaares passieren kann, dass in dem oder jedem Sicherheitssensor ein Sicherheitssignal unterdrückt wird, wenn innerhalb einer vorgegebenen Erwartungszeit das zulässige Objekt im Signalfeld erkannt wird.

Zusätzlich kann auch eine untere Erwartungszeit definiert werden, sodass eine Detektion des zulässigen Objekts in dem Zeitintervall zwischen der unteren Erwartungszeit und der Erwartungszeit erfolgen muss, wobei beide Erwartungszeiten einstellbare Parameter bilden. Diese Zeiten liegen typischerweise im Bereich einiger Sekunden.

Diese Zeitsteuerung kann dahingehend noch erweitert sein, dass nach Erfassung des zulässigen Objekts im Schutzfeld das Signalfeld frei wird, und dass nach Freiwerden des Signalfelds auf ein größeres Schutzfeld zurückgeschaltet wird, sodass eine Objektdetektion in diesem zu einer Generierung des Sicherheitssignals führt. Vorzugsweise erfolgt etwa eine Sekunde nach Freiwerden des Signalfelds eine Umschaltung auf ein größeres Schutzfeld, so dass dann eine Objektdetektion zur Generierung eines Sicherheitssignals führt.

Da die Zeitdauer, die ein zulässiges Objekt zum Passieren des Überwachungsbereichs benötigt, vorbekannt ist, ist das Zeitintervall innerhalb dessen das zulässige Objekt erkannt werden muss, an diese Zeit angepasst. Wenn dann nach Ablauf des Zeitintervalls noch ein Objekt im Signalfeld detektiert wird, ist davon auszugehen, dass es sich um ein sicherheitskritisches Objekt handelt, sodass deshalb das Sicherheitssignal generiert wird.

Schließlich kann die Zeitsteuerung derart weitergebildet sein, dass nach Ablauf einer maximalen Aktivierungsdauer des Signalfelds mittels der Umschaltmittel ein selbsttätiges Umschalten des Schutzfelds erfolgt.

Damit wird als weitere Sicherungsfunktion eine Time-out-Funktion für die Schutzfeldüberwachung, das heißt die Aktivierung eines Signalfelds im Bereich des zulässigen Objekts bereitgestellt. Die maximale Aktivierungszeit ist einstellbar und liegt typischerweise im Bereich zwischen 10 Sekunden und 100 Stunden.

Zweckmäßig sind in dem oder in jedem Sicherheitssensor Schutzfelder und Signalfelder abgespeichert.

Insbesondere sind in dem oder jedem Sicherheitssensor zulässige Objekte kennzeichnende Parameter abgespeichert. In Abhängigkeit von den Parametern können optional Signalfelder berechnet werden.

Gemäß einer zweckmäßigen Ausgestaltung weist die Sicherheitsvorrichtung eine spiegelsymmetrische Anordnung von zwei Sicherheitssensoren auf. In einem ersten Sicherheitssensor vorgegebene Schutzfelder und Signalfelder werden dann entsprechend der Anordnung der Sicherheitssensoren transformiert und in dem zweiten Sicherheitssensor übernommen.

Gemäß einer vorteilhaften Weiterbildung der Sicherheitsvorrichtung sind bei einem als Flächendistanzsensor ausgebildeten Sicherheitssensor in einem Standardbetrieb Sendelichtstrahlen periodisch innerhalb eines Abtastbereichs geführt. Bei einem aktivierten Schutzfeld oder Signalfeld sind zweckmäßig die Sendelichtstrahlen in einem sich nur über den Bereich des Schutzfelds oder Signalfelds erstreckenden reduzierten Abtastbereich geführt.

Dadurch wird einerseits die Lebensdauer des die Sendelichtstrahlen emittierenden Senders erhöht, da der Sender nicht dauernd eingeschaltet sein muss. Weiterhin verringert sich der Rechenaufwand bei der Auswertung der Sensorsignale.

Zudem werden Beeinflussungen anderer Sensoren reduziert.

Besonders vorteilhaft werden im Sicherheitssensor zulässige Objekte anhand von Konturmerkmalen erkannt. Diese Konturmerkmale können von bestimmten Geometriemerkmalen von Objekten oder Reflexionswerten von Objektoberflächen gebildet sein. Beispielsweise können an den Objekten Reflektoren angebracht sein, die anhand ihrer hohen Reflexionswerte erkannt werden.

Die Erfindung wird im Folgenden anhand der Zeichnungen erläutert. Es zeigen:
- Figur 1:: Erstes Ausführungsbeispiel der erfindungsgemäßen Sicherheitsvorrichtung zur Überwachung eines Überwachungsbereichs.
- Figur 2:: Erstes Beispiel eines Sicherheitssensors in Form eines Flächendistanzsensors für die Sicherheitsvorrichtung gemäß Figur 1.
- Figur 3:: Zweites Beispiel eines Sicherheitssensors in Form eines Flächendistanzsensors für die Sicherheitsvorrichtung gemäß Figur 1.
- Figur 4:: Sicherheitsvorrichtung gemäß Figur 1 bei aktivierten Signalfeldern.
- Figur 5a,b:: Weiteres Ausführungsbeispiel der erfindungsgemäßen Sicherheitsvorrichtung bei unterschiedlich aktivierten Signalfeldern.
- Figur 6a-c:: Weiteres Ausführungsbeispiel der erfindungsgemäßen Sicherheitsvorrichtung bei unterschiedlich aktivierten Signalfeldern.

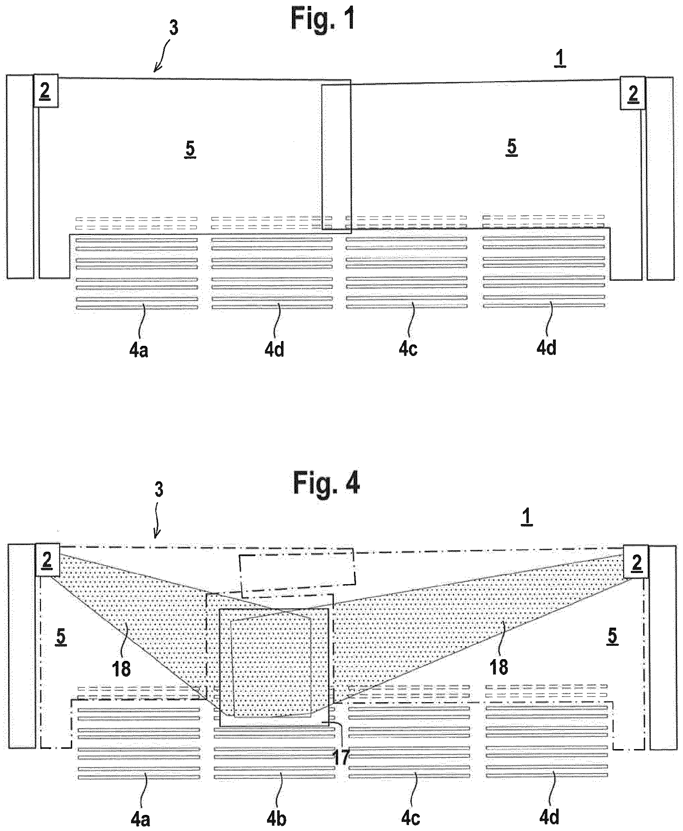

Figur 1 zeigt schematisch ein Ausführungsbeispiel der erfindungsgemäßen Sicherheitsvorrichtung 1. Die Sicherheitsvorrichtung 1 weist zwei identische oder wenigstens typgleiche optische Sicherheitssensoren 2 in Form von Flächendistanzsensoren auf. Alternativ können die Sicherheitssensoren 2 auch in Form von Kamerasensoren ausgebildet sein. Schließlich kann auch eine Kombination von Flächendistanzsensoren und Kamerasensoren vorgesehen sein.

Die Sicherheitssensoren 2 sind an gegenüberliegenden Ecken eines Überwachungsbereichs 3 angeordnet, der im vorliegenden Fall von einem Durchgangsbereich gebildet ist, durch welchen vier parallel laufende Transportbahnen 4a-4d geführt sind. Auf den Transportbahnen 4 a - d können Werkstücke oder sonstige Güter zu einer nicht dargestellten gefahrbringenden Maschine geführt werden. Mit den Sicherheitssensoren 2 der Sicherheitsvorrichtung 1 wird der Durchgangsbereich und damit der Zugang zu der Maschine überwacht. Die Sicherheitssensoren 2 sind an eine nicht dargestellte Steuerung angeschlossen, die die Maschine steuert. Die Steuerung kann beispielsweise als SPS Steuerung ausgebildet sein.

Mit jedem Sicherheitssensor 2 wird ein Schutzfeld 5 überwacht. Die Schutzfelder 5 beider Sicherheitssensoren 2 ergänzen sich derart, dass diese den gesamten Überwachungsbereich 3 abdecken.

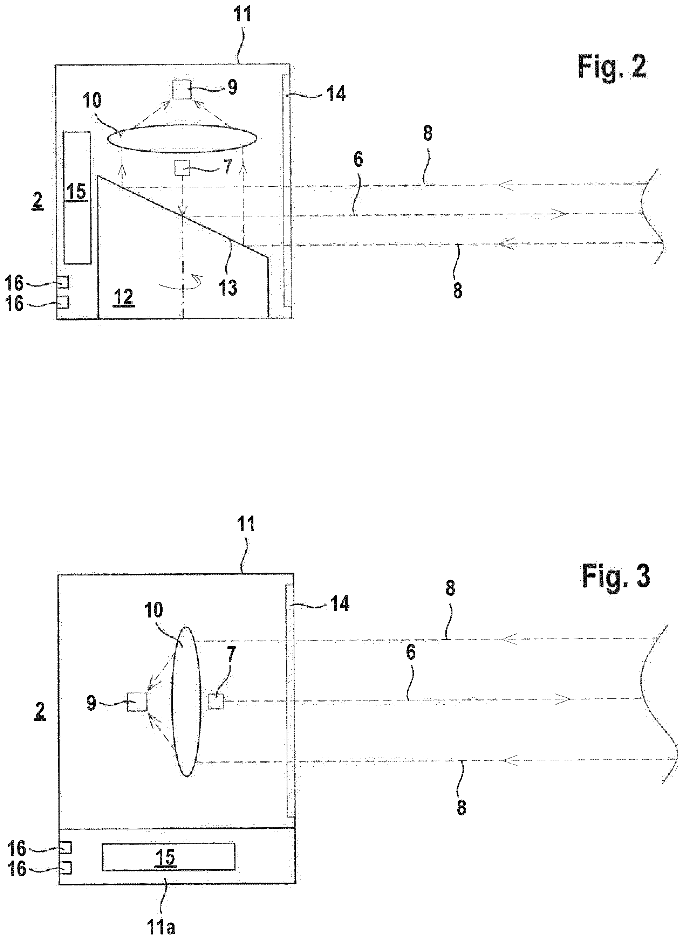

Die Figuren 2 und 3 zeigen zwei unterschiedliche Ausführungsformen der die Sicherheitssensoren 2 bildenden Flächendistanzsensoren.

Der Flächendistanzsensor gemäß Figur 2 ist als Scanner ausgebildet. Ein Sendelichtstrahlen 6 emittierender Sender 7 und ein Empfangslichtstrahlen 8 empfangender Empfänger 9, welchem eine Empfangsoptik 10 vorgeordnet ist, bilden einen Distanzsensor. Die Komponenten des Distanzsensors 2 sind stationär in einem Gehäuse 11 angeordnet. Über eine Ablenkeinheit 12, die einen um eine Drehachse drehbaren Umlenkspiegel 13 aufweist, werden die Sendelichtstrahlen 6 innerhalb eines Abtastbereichs periodisch abgelenkt und durch ein Fenster 14 aus dem Gehäuse 11 geführt, sodass mit den Sendelichtstrahlen 6 ein flächiger Überwachungsbereich 3 erfasst wird. Die vom Objekt zurückreflektierten Empfangslichtstrahlen 8 werden über die Ablenkeinheit 12 zum Empfänger 9 geführt. In einer im Flächendistanzsensor integrierten Auswerteeinheit 15 werden die mit dem Distanzsensor 2 ermittelten Distanzwerte abhängig von der jeweiligen Winkelstellung erfasst. Zur Erfüllung der Anforderungen für den Einsatz im Bereich der Sicherheitstechnik weist die Auswerteeinheit 15 einen redundanten Aufbau auf, vorzugsweise in Form zweier sich zyklisch überwachender Rechnereinheiten. Weiterhin weist der Flächendistanzsensor zwei Sicherheitsausgänge 16 auf, die von der Auswerteeinheit 15 angesteuert werden.

Der Flächendistanzsensor gemäß Figur 3 unterscheidet sich von der Ausführungsform der Figur 3 dadurch, dass das Gehäuse 11 einen rotierenden Messkopf bildet, der drehbar auf einem Sockel 11a aufsitzt. In diesem Fall wird die Ablenkbewegung der Sendelichtstrahlen 6 dadurch erhalten, dass mit dem Messkopf der gesamte Distanzsensor gedreht wird.

Mit beiden Flächendistanzsensoren können die Sendelichtstrahlen 6 in einem großen Winkelbereich geführt werden, der beispielsweise 180°umfasst.

Die an den Ausgängen der Sicherheitsausgänge der Sicherheitssensoren 2 ausgegebenen Schaltsignale werden in der Steuerung logisch verknüpft, in vorliegendem Fall in Form von UND-Verknüpfungen.

Wird in keinem der Schutzfelder 5 der Sicherheitssensoren 2 ein Objekt erkannt, so generieren beide Sicherheitssensoren 2 an ihren Sicherheitsausgängen Schaltsignale in Form von Freisignalen. Durch dessen UND-Verknüpfung wird in der Steuerung festgestellt, dass im Überwachungsbereich 3 kein Objekt vorhanden ist und die Steuerung gibt den Betrieb der Maschine frei.

Wird in einem der Sicherheitssensoren 2 im Schutzfeld 5 ein Objekt erkannt, so generiert der Sicherheitssensor 2 als Schaltsignal ein Sicherheitssignal in Form eines Abschaltens der Sicherheitsausgänge. Registriert die Steuerung wenigstens das Abschalten der Sicherheitsausgänge eines Sicherheitssensors 2, setzt die Steuerung die Maschine still, sodass von dieser keine Gefahren mehr ausgehen.

Figur 4 zeigt den Transport eines zulässigen Objekts 17 in Form einer Palette mit Werkstücken auf der zweiten Transportbahn 4b. Dieses zulässige Objekt 17 soll den Durchgangsbereich passieren können, ohne dass hierzu die Sicherheitssensoren 2 ein Sicherheitssignal generieren, das zum Stillsetzen der Maschine führt.

In diesem Fall werden kurz vor Eintreten des zulässigen Objekts 17 durch Umschaltmittel zwei Signalfelder 18 aktiviert, und zwar je eines für jeden Sicherheitssensor 2. Die Umschaltmittel sind im vorliegenden Fall im Sicherheitssensor 2 integriert. Alternativ können die Umschaltmittel auch in der Steuerung integriert sein.

Die Signalfelder 18 erstrecken sich jeweils über einen Winkelbereich derart, dass das zulässige Objekt 17 erfasst wird. Die Signalfelder 18 schneiden sich in einer Warnzone, in der das zulässige Objekt 17 liegt. Außerhalb der Signalfelder 18 bleiben die Schutzfelder 5 aktiv.

Die Signalfelder 18 sind, wie auch die Schutzfelder 5, in den Auswerteeinheiten 15 der jeweiligen Sicherheitssensoren 2 abgespeichert. Insbesondere können Parameter eines zulässigen Objekts 17, wie dessen Abmessungen und Transportgeschwindigkeit, in der Auswerteeinheit 15 des Sicherheitssensors 2 abgespeichert werden. Dann kann aus diesen Parametern das zugehörige Signalfeld 18 berechnet und dann abgespeichert werden.

Mit der Kombination von Schutzfeldern 5 und Signalfeldern 18 wird anstelle eines Mutings, bei dem der gesamte Sicherheitssensor 2 stummgeschaltet wird, nur der Schutzfeldbereich freigeschaltet, in dem sich das zulässige Objekt 17 befindet. Der restliche Teil des Schutzfelds 5 wird permanent überwacht.

Hierzu wird in der Steuerung abgeprüft, ob innerhalb einer Erwartungszeit nach Aktivierung der Signalfelder 18 das zulässige Objekt 17 in den Signalfeldern 18 erkannt wird. Diese Zeitüberwachung kann dahingehend erweitert sein, das abgeprüft wird, ob das zulässige Objekt 17 zwischen einer unteren Erwartungszeit und der Erwartungszeit erkannt wird.

Wird in diesem Zeitintervall das zulässige Objekt 17 erkannt, liegt ein fehlerfreier Fall vor und es wird kein Sicherheitssignal erzeugt. Wird jedoch das zulässige Objekt 17 nicht innerhalb des zulässigen Objekts 17 erkannt, liegt ein Fehlerfall vor und es wird mit den Sicherheitssensoren 2 ein Sicherheitssignal generiert, das zum Stillsetzen der Maschine führt.

Etwa einige Sekunden nach Freiwerden der Signalfelder 18 werden die Schutzfelder 5 automatisch so umgeschaltet, dass der gesamte Durchgangsbereich geschützt ist. Wenn dann in einem Schutzfeld 5 ein Objekt erkannt wird, generiert der jeweilige Sicherheitssensor 2 ein Sicherheitssignal, da dann die Gefahr besteht, dass ein sicherheitskritisches Objekt im Überwachungsbereich 3 vorliegt.

Nach einer weiteren Zeitspanne, die vorzugsweise etwa 20 Sekunden beträgt, schalten die Umschaltmittel die Signalfelder 18 zurück. Falls diese Umschaltung nicht erfolgt, generieren die Sicherheitssensoren 2 ein Sicherheitssignal.

Parallel zu der Signalfeld-Überwachung erfolgt eine Objektüberwachung in dem Rest-Schutzfeld 5. Wird in diesem Rest-Schutzfeld 5 ein Objekt erkannt, wird ebenfalls ein Sicherheitssignal generiert, das zum Stillsetzen der Maschine führt.

Prinzipiell können parallel mehrere Signalfelder 18 für jeden Sicherheitssensor 2 definiert werden, um auf dieselbe Weise mehrere zulässige Objekte 17 auf unterschiedlichen Transportbahnen 4 a, 4b, 4c, 4d zu überwachen.

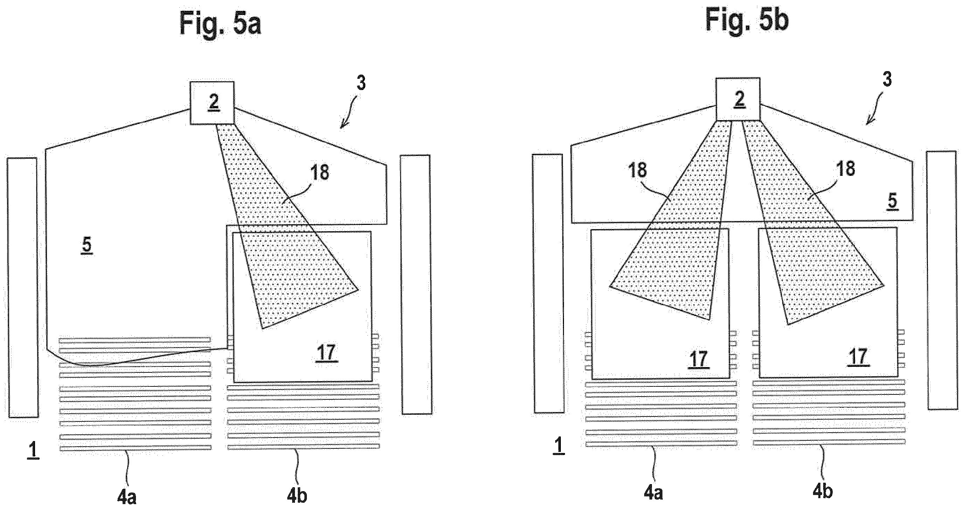

Die Figuren 5a, 5b zeigen ein weiteres Ausführungsbeispiel der erfindungsgemäßen Sicherheitsvorrichtung 1. Im Unterschied zur Ausführungsform gemäß Figur 1 weist die Sicherheitsvorrichtung 1 nur einen Sicherheitssensor 2 in Form eines Flächendistanzsensors auf, der zentral oberhalb eines Durchgangsbereichs angeordnet ist, durch welchen zwei Transportbahnen 4a, 4b laufen.

Entsprechend der Ausführungsform gemäß Figur 1 können wieder Signalfelder 18 aktiviert werden um die Überwachung derart zu realisieren, dass zulässige Objekte 17 durch den Überwachungsbereich 3 geführt werden, ohne dass der Sicherheitssensor 2 ein Sicherheitssignal generiert. Bei dem in Figur 5a dargestellten Fall wird ein zulässiges Objekt 17 auf der Transportbahn 4b durch den Überwachungsbereich 3 geführt. Dementsprechend wird ein an dieses zulässige Objekt 17 angepasstes Signalfeld 18 aktiviert. Bei dem in Figur 5b dargestellten Fall wird auf jeder Transportbahn 4a, 4b ein zulässiges Objekt 17 durch den Überwachungsbereich 3 geführt. Dementsprechend werden für ein Muting zwei an die zulässigen Objekte 17 angepasste Signalfelder 18 und ein reduziertes Schutzfeld 5 aktiviert.

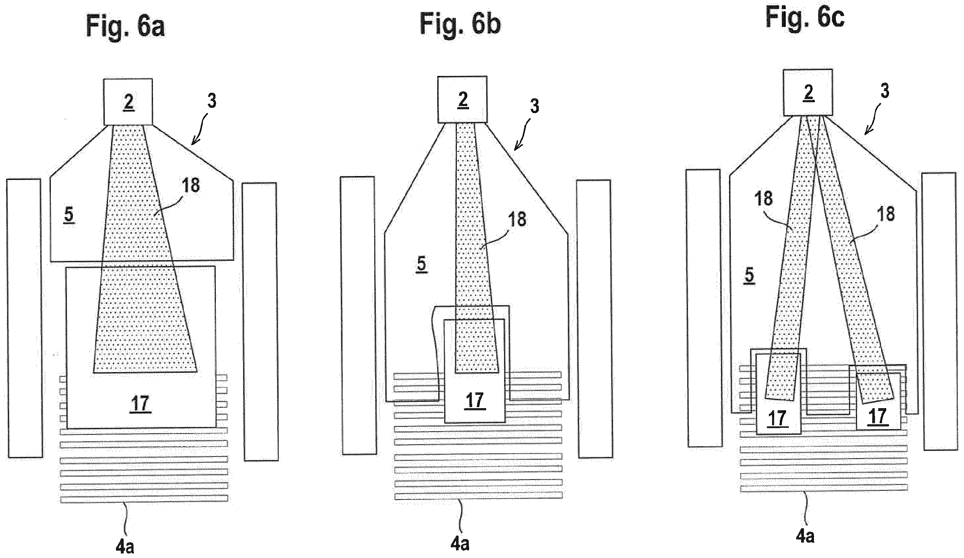

Die Figuren 6a - c zeigen eine Variante der Ausführungsform der Figuren 5a, b. In diesem Fall ist ein Sicherheitssensor 2 in Form eines Flächendistanzsensors oberhalb eines Durchgangsbereichs angeordnet, durch welchen eine Transportbahn 4a läuft.

Entsprechend der Größe und Anzahl der zulässigen Objekte 17 werden für ein Muting Signalfelder 18 von unterschiedlicher Größe und Anzahl aktiviert, wie die Figuren 6a - c zeigen.

### Bezugszeichenliste

- (1): Sicherheitsvorrichtung
- (2): Sicherheitssensor
- (3): Überwachungsbereich
- (4a - d): Transportbahn
- (5): Schutzfeld
- (6): Sendelichtstrahlen
- (7): emittierender Sender
- (8): Empfangslichtstrahlen
- (9): empfangender Empfänger
- (10): Gehäuse
- (11a): Sockel
- (12): Ablenkeinheit
- (13): Umlenkspiegel
- (14): Fenster
- (15): Auswerteeinheit
- (16): Sicherheitsausgang
- (17): zulässiges Objekt
- (18): Signalfeld

## Patentansprüche

1. Sicherheitsvorrichtung (1) mit wenigstens einem optischen Sicherheitssensor (2), welcher zur Überwachung eines flächigen oder räumlichen Überwachungsbereichs (3) ausgebildet ist, mit einer dem Sicherheitssensor (2) zugeordneten Sicherheitsausgangsschaltung mit einer Anordnung von Sicherheitsausgängen (16), welche abhängig von Signalen des Sicherheitssensors (2) gesteuert sind, und mit Umschaltmitteln, mittels derer wenigstens ein Schutzfeld (5) und wenigstens ein Signalfeld (18) aktivierbar ist, wobei der Sicherheitssensor (2) ein Sicherheitssignal in Form eines Abschaltens der Sicherheitsausgänge (16) generiert, falls mit dem Sicherheitssensor (2) ein Objekt innerhalb des aktivierten Schutzfelds (5) detektiert wird und falls innerhalb eines vorgegebenen Zeitintervalls kein zulässiges Objekt innerhalb des aktivierten Signalfelds(18) detektiert wird.

2. Sicherheitsvorrichtung (1) nach Anspruch 1, **dadurch gekennzeichnet, dass** sich ein oder mehrere Signalfelder (18) über Teilbereiche des Überwachungsbereichs (3) erstrecken, und dass sich ein oder mehrere Schutzfelder (5) über die nicht von den Signalfeldern (18) erfassten Teilbereiche des Überwachungsbereichs (3) erstrecken.

3. Sicherheitsvorrichtung (1) nach Anspruch 1, **dadurch gekennzeichnet, dass** die Umschaltmittel in dem oder in den Sicherheitssensoren (2) integriert sind, oder dass die Umschaltmittel in einer Steuerung integriert sind.

4. Sicherheitsvorrichtung (1) nach einem der Ansprüche 1 - 3, **dadurch gekennzeichnet, dass** der oder jeder optische Sicherheitssensor (2) ein Flächendistanzsensor oder ein Kamerasensor ist.

5. Sicherheitsvorrichtung (1) nach einem der Ansprüche 1 - 4, **dadurch gekennzeichnet, dass** jeder Sicherheitssensor (2) zwei Sicherheitsausgänge (16) aufweist.

6. Sicherheitsvorrichtung (1) nach einem der Ansprüche 1 - 5, **dadurch gekennzeichnet, dass** diese zwei optische Sicherheitssensoren (2) aufweist, welche vom gleichen Sensortyp oder von verschiedenen Sensortypen gebildet sind.

7. Sicherheitsvorrichtung (1) nach Anspruch 6, **dadurch gekennzeichnet, dass** die Sicherheitsausgänge (16) der Sicherheitssensoren (2) logisch verknüpft sind.

8. Sicherheitsvorrichtung (1) nach Anspruch 7, **dadurch gekennzeichnet, dass** bei Aktivierung jeweils eines Schutzfelds (5) in jedem Sicherheitssensor (2) ein Sicherheitssignal generiert wird, wenn in wenigstens einem Schutzfeld (5) ein Objekt detektiert wird,

9. Sicherheitsvorrichtung (1) nach Anspruch 7, **dadurch gekennzeichnet, dass** bei Aktivierung jeweils eines Signalfelds (18) in jedem Sicherheitssensor (2) ein Sicherheitssignal unterdrückt ist, wenn sich in einer Warnzone, in welcher sich die Signalfelder (18) schneiden, innerhalb des Zeitintervalls ein zulässiges Objekt (17) erkannt wird.

10. Sicherheitsvorrichtung (1) nach einem der Ansprüche 1 - 9, **dadurch gekennzeichnet, dass** nach der Umschaltung von einem Schutzfeld (5) und einem Signalfeld (18) in dem oder jedem Sicherheitssensor (2) ein Sicherheitssignal unterdrückt wird, wenn innerhalb einer vorgegebenen Erwartungszeit das zulässige Objekt (17) im Signalfeld (18), aber nicht im Schutzfeld (5) erkannt wird.

11. Sicherheitsvorrichtung (1) nach Anspruch 10, **dadurch gekennzeichnet, dass** nach Erfassung des zulässigen Objekts (17) im Signalfeld (18) das Signalfeld (18) frei wird, und dass nach Freiwerden des Signalfelds (18) ein Umschalten auf wenigstens ein Schutzfeld (15) erfolgt, welches den gesamten Überwachungsbereich umfasst, so dass eine Objektdetektion in diesem Schutzfeld (15) zu einer Generierung des Sicherheitssignals führt.

12. Sicherheitsvorrichtung (1) nach einem der Ansprüche 10 oder 11, **dadurch gekennzeichnet, dass** nach Ablauf einer maximalen Aktivierungsdauer ein selbsttätiges Rückschalten auf das Schutzfeld (5) und Signalfeld (18) vor der Umschaltung erfolgt.

13. Sicherheitsvorrichtung (1) nach einem der Ansprüche 1 - 12, **dadurch gekennzeichnet, dass** in dem oder in jedem Sicherheitssensor (2) Schutzfelder (5) und Signalfelder (18) abgespeichert sind.

14. Sicherheitsvorrichtung (1) nach Anspruch 12, **dadurch gekennzeichnet, dass** in dem oder in jedem Sicherheitssensor (2) zulässige Objekte (17) kennzeichnende Parameter abgespeichert sind und in Abhängigkeit von den Parametern Schutzfelder (5) und Signalfelder (18) aktivierbar sind.

15. Sicherheitsvorrichtung (1) nach einem der Ansprüche 13 oder 14, **dadurch gekennzeichnet, dass** diese eine spiegelsymmetrische Anordnung von zwei Sicherheitssensoren (2) aufweist, und dass in einem ersten Sicherheitssensor (2) vorgegebene Schutzfelder (5) und Signalfelder (18) gespiegelt in dem zweiten Sicherheitssensor (2) übernommen werden.

16. Sicherheitsvorrichtung (1) nach einem der Ansprüche 4 - 15, **dadurch gekennzeichnet, dass** bei einem als Flächendistanzsensor ausgebildeten Sicherheitssensor (2) in einem Standardbetrieb Sendelichtstrahlen (6) periodisch innerhalb eines Abtastbereichs geführt sind, und dass bei einem aktivierten Schutzfeld (5) oder Signalfeld (18) die Sendelichtstrahlen (6) in einem sich nur über den Bereich des Schutzfelds (5) oder Signalfelds (18) erstreckenden reduzierten Abtastbereich geführt sind.

17. Sicherheitsvorrichtung (1) nach einem der Ansprüche 1 - 16, **dadurch gekennzeichnet, dass** in dem oder in jedem Sicherheitssensor (2) ein Meldesignal generiert wird, wenn ein Signalfeld (18) aktiviert ist.

18. Sicherheitsvorrichtung (1) nach einem der Ansprüche 1 - 16, **dadurch gekennzeichnet, dass** in dem oder in jedem Sicherheitssensor (2) ein Meldesignal generiert wird, wenn ein zulässiges Objekt (17) in einem Signalfeld (18) detektiert wird.

19. Sicherheitsvorrichtung (1) nach einem der Ansprüche 1 - 18, **dadurch gekennzeichnet, dass** mit dieser ein sich über mehrere Transportbahnen (4a bis 4d) erstreckender Durchgangsbereich überwacht wird, wobei für auf den Transportbahnen (4a bis 4d) transportierte zulässige Objekte (17) selektiv Signalfelder (18) aktivierbar sind.

20. Sicherheitsvorrichtung (1) nach Anspruch 19, **dadurch gekennzeichnet, dass** ein Sicherheitssensor (2) zentral oberhalb des Durchgangsbereichs angeordnet ist.

21. Sicherheitsvorrichtung (1) nach Anspruch 20, **dadurch gekennzeichnet, dass** zwei Sicherheitssensoren (2) vorgesehen sind, die jeweils an einer oberen Ecke des Durchgangsbereichs angeordnet sind.

22. Sicherheitsvorrichtung (1) nach einem der Ansprüche 1 bis 20, **dadurch gekennzeichnet, dass** zulässige Objekte (17) anhand von Konturmerkmalen erkannt werden.

## Claims

1. A safety device (1) with at least one optical safety sensor (2) which sensor (2) which is designed to monitor a flat or spatial monitoring area (3), with a monitoring area (3), with a safety output circuit assigned to the safety sensor (2) and having an arrangement of safety outputs (16) which are controlled as a function of signals from the safety sensor (2), and with switching means by means of which at least one protective field is safety sensor (2), and having switching means by means of which at least one protective field (5) and at least one signal field (18) can be activated , the safety sensor (2) transmitting a safety signal in the form of a switch-off of the safety outputs (16) if an object is detected with the sensor (2) detects an object within the activated protective field (5) and if within a is detected with the safety sensor (2) and if no permissible object is detected within the activated signal field (18) within a predefined time interval.

2. The safety device (1) according to claim 1, **characterised in that** one or more signal fields (18) extend over partial areas of the monitoring area (3), and **in that** one or more protective fields (5) extend over the partial areas of the monitoring area (3) not covered by the signal fields (18).

3. The safety device (1) according to claim 1, **characterised in that** the switching means are integrated in the safety sensor(s) (2) or **in that** the switching means are integrated in a controller.

4. The safety device (1) according to any of claims 1 to 3, **characterised in that** the or each optical safety sensor (2) is an area distance sensor or a camera sensor.

5. The safety device (1) according to any of claims 1 to 4, **characterised in that** each safety sensor (2) has two safety outputs (16).

6. The safety device (1) according to one of claims 1 to 5, **characterised in that** it comprises two optical safety sensors (2), which are of the same sensor type or of different sensor types.

7. The safety device (1) according to claim 6, **characterised in that** the safety outputs (16) of the safety sensors (2) are logically linked.

8. The safety device (1) according to claim 7, **characterised in that** on activation of a respective protective field (5) in each safety sensor (2), a safety signal is generated if an object is detected in at least one protective field (5).

9. The safety device (1) according to claim 7, **characterised in that** when a signal field (18) in each safety sensor (2) is activated, a safety signal is suppressed if, in a warning zone in which the signal fields (18) intersect, within the time interval a permissible object (17) is detected.

10. The safety device (1) according to any of claims 1 to 9, **characterised in that** after the switchover from a protective field (5) and a signal field (18) in the or each safety sensor (2), a safety signal is suppressed if the permissible object (17) is detected in the signal field (18) but not in the protective field (5) within a predetermined expectation time.

11. The safety device (1) according to claim 10, **characterised in that**, after detection of the permissible object (17) in the signal field (18), the signal field (18) is released, and **in that**, after the signal field (18) becomes free a switchover to at least one protective field (15) takes place, which comprises the entire the entire monitoring area, so that an object detection in this detection in this protective field (15) leads to generation of the safety signal.

12. The safety device (1) according to one of claims 10 or 11, **characterised in that**, after expiry of a maximum activation period, an automatic switching back to the protective field (5) and signal field (18) prior to the switchover takes place.

13. The safety device (1) according to one of the claims 1 to 12, **characterised in that** protective fields (5) and signal fields (18) are stored in the or in each safety sensor (2).

14. The safety device (1) according to claim 12, **characterised in that** parameters characterising permissible objects (17) are stored in the or in each safety sensor (2) and can be activated depending on the parameters protective fields (5) and signal fields (18) can be activated as a function of the parameters.

15. The security device (1) according to one of claims 13 or 14, **characterised in that** it comprises a mirror symmetrical arrangement of two safety sensors (2), and **in that** predetermined protective fields (5) and signal fields (18) in a first safety sensor (2) are mirrored in the second safety sensor (2).

16. The safety device (1) according to one of the claims 4 to 15, **characterised in that**, in the case of a safety sensor in the form of an area distance sensor, the sensor (2) designed as an area distance sensor, transmitted light beams (6) are guided periodically within a scanning area in a standard mode, and **in that**, in the case of an activated protective field (5) or signal field (18), the transmitted light beams (6) are guided only over the area of the protective field (5) or signal field (18).

17. The safety device (1) according to one of the claims 1 to 16, **characterised in that** a signalling signal is generated in the or each **characterised in that** a signalling signal generated in the or each safety sensor (2) when a signal field (18) is activated.

18. The safety device (1) according to one of the claims 1 to 16, **characterised in that** a signal is generated in the or each safety sensor (2) when a permissible object (17) is detected in a signal field (18).

19. The safety device (1) according to one of the claims 1 to 18, **characterised in that** it is used to monitor a passage area extending over a plurality of transport paths (4a (4a to 4d) is monitored, whereby for permissible objects (17) transported on the objects (17) transported on the transport paths (4a to 4d), signal fields (18) can be activated selectively for permissible objects (17) transported on the transport paths (4a to 4d).

20. The safety device (1) according to claim 19, **characterised in, that** a safety sensor (2) is arranged centrally above the passage region.

21. The safety device (1) according to claim 20, **characterised in that** two safety sensors (2) are provided, each of which is arranged at an upper corner of the passage area.

22. The safety device (1) according to one of claims 1 to 20, **characterised in that** permissible objects (17) are recognised by means of contour features.

## Revendications

1. Dispositif de sécurité (1) avec au moins un capteur de sécurité optique (2), lequel capteur (2) est conçu pour surveiller une zone de surveillance (3) plane ou spatiale, avec une zone de surveillance (3), avec un circuit de sortie de sécurité associé au capteur de sécurité (2) et présentant un agencement de sorties de sécurité (16) qui sont commandées en fonction de signaux du capteur de sécurité (2), et avec des moyens de commutation au moyen desquels au moins un champ de protection est le capteur de sécurité (2), et comportant des moyens de commutation permettant d'activer au moins un champ de protection (5) et au moins un champ de signalisation (18), le capteur de sécurité (2) émettant un signal de sécurité sous la forme d'une désactivation des sorties de sécurité (16) lorsqu'un objet est détecté par le capteur (2), lorsqu'un objet se trouve à l'intérieur du champ de protection activé (5) et lorsqu'un objet admissible est détecté par le capteur de sécurité (2) à l'intérieur d'un champ de signalisation activé (18) dans un intervalle de temps prédéfini.

2. Dispositif de sécurité (1) selon la revendication 1, **caractérisé en ce qu'**un ou plusieurs champs de signalisation (18) s'étendent sur des zones partielles de la zone de surveillance (3), et **en ce qu'**un ou plusieurs champs de protection (5) s'étendent sur les zones partielles de la zone de surveillance (3) non couvertes par les champs de signalisation (18).

3. Dispositif de sécurité (1) selon la revendication 1, **caractérisé en ce que** les moyens de commutation sont intégrés dans le(s) capteur(s) de sécurité (2) ou **en ce que** les moyens de commutation sont intégrés dans un dispositif de commande.

4. Dispositif de sécurité (1) selon l'une des revendications 1 à 3, **caractérisé en ce que** le ou chaque capteur optique de sécurité (2) est un capteur de distance de zone ou un capteur de caméra.

5. Dispositif de sécurité (1) selon l'une des revendications 1 à 4, **caractérisé en ce que** chaque capteur de sécurité (2) possède deux sorties de sécurité (16).

6. Dispositif de sécurité (1) selon l'une des revendications 1 à 5, **caractérisé en ce qu'**il comprend deux capteurs optiques de sécurité (2), qui sont du même type de capteur ou de types de capteurs différents.

7. Dispositif de sécurité (1) selon la revendication 6, **caractérisé en ce que** les sorties de sécurité (16) des capteurs de sécurité (2) sont logiquement liées.

8. Dispositif de sécurité (1) selon la revendication 7, **caractérisé en ce que** lors de l'activation d'un champ de protection (5) respectif dans chaque capteur de sécurité (2), un signal de sécurité est généré si un objet est détecté dans au moins un champ de protection (5).

9. Dispositif de sécurité (1) selon la revendication 7, **caractérisé en ce que** lorsqu'un champ de signal (18) de chaque capteur de sécurité (2) est activé, un signal de sécurité est supprimé si, dans une zone d'avertissement dans laquelle les champs de signal (18) se croisent, un objet (17) admissible est détecté dans l'intervalle de temps.

10. Dispositif de sécurité (1) selon l'une des revendications 1 à 9, **caractérisé en ce qu'**après la commutation d'un champ de protection (5) et d'un champ de signalisation (18) dans le ou chaque capteur de sécurité (2), un signal de sécurité est supprimé si l'objet autorisé (17) est détecté dans le champ de signalisation (18) mais pas dans le champ de protection (5) dans un délai prédéterminé.

11. Dispositif de sécurité (1) selon la revendication 10, **caractérisé en ce que**, après la détection de l'objet autorisé (17) dans le champ de signalisation (18), le champ de signalisation (18) est libéré, et **en ce que**, après que le champ de signalisation (18) devient libre, une commutation vers au moins un champ de protection (15) a lieu, qui comprend l'ensemble de la zone de surveillance, de sorte qu'une détection d'objet dans ce champ de protection (15) entraîne la génération du signal de sécurité.

12. Dispositif de sécurité (1) selon l'une des revendications 10 ou 11, **caractérisé en ce qu'**après l'expiration d'une période d'activation maximale, une commutation automatique vers le champ de protection (5) et le champ de signalisation (18) a lieu avant la commutation.

13. Dispositif de sécurité (1) selon l'une des revendications 1 à 12, **caractérisé en ce que** les champs de protection (5) et les champs de signalisation (18) sont mémorisés dans le ou dans chaque capteur de sécurité (2).

14. Dispositif de sécurité (1) selon la revendication 12, **caractérisé en ce que** les paramètres caractérisant les objets autorisés (17) sont stockés dans le ou dans chaque capteur de sécurité (2) et peuvent être activés en fonction des paramètres, les champs de protection (5) et les champs de signalisation (18) peuvent être activés en fonction des paramètres.

15. Dispositif de sécurité (1) selon l'une des revendications 13 ou 14, **caractérisé en ce qu'**il comprend un agencement symétrique en miroir de deux capteurs de sécurité (2), et **en ce que** des champs de protection (5) et des champs de signal (18) prédéterminés dans un premier capteur de sécurité (2) sont réfléchis dans le deuxième capteur de sécurité (2).

16. Dispositif de sécurité (1) selon l'une des revendications 4 à 15, **caractérisé en ce que**, dans le cas d'un capteur de sécurité sous la forme d'un capteur de distance de surface, le capteur (2) conçu comme un capteur de distance de surface, des rayons lumineux d'émission (6) sont guidés périodiquement dans une zone de balayage dans un mode standard, et **en ce que**, dans le cas d'un champ de protection (5) ou d'un champ de signalisation (18) activé, les rayons lumineux d'émission (6) sont guidés uniquement sur la zone du champ de protection (5) ou du champ de signalisation (18).

17. Dispositif de sécurité (1) selon l'une des revendications 1 à 16, **caractérisé en ce qu'**un signal de signalisation est généré dans le ou chaque capteur de sécurité (2) lorsqu'un champ de signal (18) est activé.

18. Dispositif de sécurité (1) selon l'une des revendications 1 à 16, **caractérisé en ce qu'**un signal est généré dans le ou chaque capteur de sécurité (2) lorsqu'un objet autorisé (17) est détecté dans un champ de signal (18).

19. Dispositif de sécurité (1) selon l'une des revendications 1 à 18, **caractérisé en ce qu'**il permet de surveiller une zone de passage s'étendant sur plusieurs voies de transport (4a (4a à 4d) est surveillé, des champs de signalisation (18) pouvant être activés de manière sélective pour les objets autorisés (17) transportés sur les voies de transport (4a à 4d).

20. Dispositif de sécurité (1) selon la revendication 19, **caractérisé en ce qu'**un capteur de sécurité (2) est disposé au centre, au-dessus de la zone de passage.

21. Dispositif de sécurité (1) selon la revendication 20, **caractérisé en ce que** deux capteurs de sécurité (2) sont prévus, chacun d'entre eux étant disposé à un coin supérieur de la zone de passage.

22. Dispositif de sécurité (1) selon l'une des revendications 1 à 20, **caractérisé en ce que** les objets autorisés (17) sont reconnus au moyen de caractéristiques de contour.
